# EUROPÄISCHE PATENTANMELDUNG

(11) **EP 1 715 379 A2**
(43) Veröffentlichungstag der Anmeldung: **25.10.2006**
(21) Anmeldenummer: 06007764.1
(22) Anmeldetag: 13.04.2006
(51) Int. Cl.: G03B 13/02

(54) **Winkelvorsatz für den Einblick einer Messsucherkamera**

(30) Priorität: 18.04.2005 DE 102005018010
(71) Anmelder: Leica Camera Aktiengesellschaft, 35606 Solms bei Wetzlar (DE)
(72) Erfinder: Karbe, Peter, 35638 Leun (DE); Wiegand, Holger, 35606 Solms (DE)
(74) Vertreter: Stamer, Harald

(57) **Zusammenfassung**

Es wird ein Winkelvorsatz mit einem Gehäuse (1) zur Befestigung am Einblick (15) einer Meßsucherkamera (21) mit seiten- und höhenrichtiger Darstellung des Sucherbildes unter verändertem Einblickwinkel beschrieben, welches als Bildumlenkelement ein Bauernfeindprisma (5) mit zweimaliger Reflexion in einer Ebene enthält, wobei ein erster Bereich (A,A') der Basisfläche (4) des Bauernfeindprismas (5) dem Einblicksucher (15) nachgeschaltet ist, die diesem Bereich gegenüberliegende Fläche als Spiegelfläche (8) ausgebildet und zur Basisfläche (4) derart geneigt ist, dass ein senkrecht in den ersten Bereich eintretender Strahl (2) auf einen zweiten Bereich (B,B') der Basisfläche (4) unter einem totalreflektierenden Winkel gespiegelt wird und die Lichtaustrittsfläche (10) des Bauernfeindprismas (5) gegenüber der Basisfläche (4) derart geneigt ist, dass der totalreflektierte Strahl (9) senkrecht auf die Lichtaustrittsfläche (10) trifft.

## Beschreibung

Die Erfindung betrifft einen Winkelvorsatz mit einem Gehäuse zur Befestigung am Einblick einer Meßsucherkamera mit seiten- und höhenrichtiger Darstellung des Sucherbildes unter verändertem Einblickwinkel.

Winkelvorsätze dieser Art werden auch als Winkelsucher bezeichnet und sind an sich bekannt.

Bei fotografischen Kameras sind im Normalfall das durch den Bildsucher blickende Auge bzw. der Fotograf dem Aufnahmeobjekt zugewendet. In anderen Fällen, beispielsweise bei Makroaufnahmen von Pflanzen oder Tieren in Bodennähe, oder bei Portraitaufnahmen sitzender Personen ist diese normale Einblickrichtung unvorteilhaft.

Im Bereich der Portraitfotografie sind daher Spiegelreflex Mittelformatkameras beliebt. Bei diesen Kameras kann der Fotograf das Aufnahmemotiv, welches durch ein Objektiv von einem Spiegel rechtwinklig nach oben auf eine Mattscheibe projiziert wird, in einem sogenannten Lichtschacht unter einem Winkel von 90° zum Aufnahmeobjekt beobachten. Das betrachtete Bild ist durch die einfache Spiegelung zwar aufrechtstehend aber seitenverkehrt, was die Bildgestaltung erschwert.

Aus DE 29 52 207 A1 ist ein Winkelsucher bekannt, der vom Spiegelkasten trennbar ist. Der als Prismensucher bezeichnete Winkelsucher ermöglicht einen veränderten Einblickwinkel von etwa 45° zu der optischen Achse des Objektivs. Er weist zur seitenrichtigen Darstellung des Sucherbildes ein Pentaprisma mit Dachkante und zur höhenrichtigen Darstellung eine zweimalige Reflexion in einer Ebene auf.

Die Bildaufnahme mit Meßsucherkameras unterscheidet sich hiervon jedoch erheblich. Die Bildgestaltung und Scharfstellung erfolgt nicht anhand eines betrachteten Bildes, welches durch das Aufnahmeobjektiv hindurch seiten- und höhenverkehrt erzeugt wurde. Das Sucherbild einer Meßsucherkamera wird durch ein separates optisches System seiten- und höhenrichtig am Einblick erzeugt. Das durch den Sucher blickende Auge ist dem Aufnahmeobjekt zugewendet und die Scharfstellung erfolgt anhand eines Mischbildes.

Aus DE - PS 657 348 ist ein auswechselbarer Winkelsucher bekannt, der einen geraden und auch einen veränderten Einblickwinkel, nämlich senkrecht zur Aufnahmerichtung ermöglicht. Der austauschbare Winkelvorsatz ist aufwändig gebaut und enthält zwei Linsen und ein Pentaprisma.

Wenn bei Meßsucherkameras auswechselbare Aufnahmeobjektive unterschiedlicher Brennweite bereitgestellt werden, enthält das Meßsuchersystem unterschiedliche Masken als Leuchtrahmen, die dem Bildfeld der jeweiligen Brennweite zugeordnet sind und in den Meßsucherstrahlengang eingespiegelt werden. Die errechnete oder eingestellte Belichtungszeit wird in einem Bereich außerhalb der Leuchtrahmen dargestellt. Der Fotograf kann das gesamte Sucherbildfeld nur erfassen, wenn sich sein Auge direkt und ohne Abstand am Einblick der Meßsucherkamera befindet.

Ein einfach gestalteter Winkelsucher ist aus DE - PS 678 276 bekannt und besteht aus einem beabstandet vom Einblick des Suchers schräg angebrachten Spiegel. Das Gehäuse zur Aufnahme des Spiegels ist um die Sucherachse verdrehbar und ermöglicht so verschiedene, quer zu dieser Achse liegende Einblickrichtungen. Durch die einfache Spiegelung ist jedoch das Sucherbild bei einem Einblick von Oben höhenverkehrt und bei einem Einblick von der Seite seitenverkehrt dargestellt. Der in einem großen Abstand vom Einblick des Suchers angebrachte Spiegel ermöglicht nicht den Überblick über das gesamte Sucherbildfeld. Außen liegende Anzeigeelemente und Maskenrahmen sind nicht mehr sichtbar.

Der Erfindung lag daher die Aufgabe zugrunde, den Winkelvorsatz so zu verbessern, dass er den Überblick über einen möglichst großen Bereich des Suchers in seiten- und höhenrichtiger Darstellung ermöglicht, einfach und kompakt aufgebaut ist und dabei in beliebiger Richtung um die Sucherachse verdrehbar ist.

Diese Aufgabe wird bei einem Winkelvorsatz der eingangs genannten Art erfindungsgemäß durch die kennzeichnenden Merkmale des Patentanspruchs 1 gelöst. Vorteilhafte Ausgestaltungen ergeben sich aus den Merkmalen der Unteransprüche.

Bei dem erfindungsgemäßen Winkelvorsatz ist als Bildumkehrelement ein Bauernfeindprisma mit zweimaliger Reflexion in einer Ebene vorgesehen. Der optische Weg durch den Winkelvorsatz wird auf diese Weise sehr kurz gehalten und an der Lichtaustrittsfläche erscheint eine seiten- und höhenrichtige Darstellung des Sucherbildes. Ein erster Bereich der Basisfläche des Bauernfeindprismas ist dem Einblick der Meßsucherkamera nachgeschaltet und die diesem Bereich gegenüberliegende Fläche ist als Spiegelfläche ausgebildet. Die Spiegelfläche ist derart geneigt, dass ein senkrecht in den ersten Bereich eintretender Strahl auf einen zweiten Bereich der Basisfläche unter einem totalreflektierenden Winkel gespiegelt wird. Die Basisfläche ist auf diese Weise vorteilhaft gleichzeitig für den Strahldurchtritt und die Totalreflexion nutzbar, ohne dass auf dieser Fläche aufwändige Maskierungen und unterschiedliche optischen Beschichtungen notwendig sind. Totalreflexion tritt an jedem Übergang von einem optisch dichteren zu einem optisch dünneren Medium auf, wenn der sogenannte Grenzwinkel überschritten wird. Dieser ergibt sich nach dem Brechungsgesetz aus dem Arcussinus des Verhältnisses der Brechzahl des optisch dünneren zum optisch dichteren Medium. Die Lichtaustrittsfläche ist bei dem erfindungsgemäßen Bauernfeindprisma gegenüber der Basisfläche derart geneigt, dass der totalreflektierte Strahl senkrecht auf die Lichtaustrittsfläche trifft, unerwünschte Brechungseffekte werden auf diese Weise vermieden. Der Bildablenkwinkel ist unabhängig von der Prismendrehung.

In einer vorteilhaften Ausgestaltung der Erfindung für einen bequemen Einblick in den Winkelvorsatz schließen die Spiegelfläche einen Winkel von 24° und die Lichtaustrittsfläche einen Winkel von 48° Grad mit der Basisfläche ein. Auf diese Weise ergibt sich eine besonders kompakte Ausführung des Prismas mit geringem Glasvolumen. Der Einblick in den Winkelvorsatz erfolgt dabei unter 48° zur optischen Achse des Einblicksuchers der Meßsucherkamera, was sich als besonders universell und bequem für den Benutzer erwiesen hat. Selbstverständlich sind auch andere Einblickwinkel möglich und über eine geeignete Wahl der Brechzahl des Glases des Prismas, im Bereich der Bedingung für die Totalreflexion variierbar. Soll der Lichtstrahl zur Einhaltung der Bedingungen für die Totalreflexion beispielsweise unter einem minimalen Winkel von etwa 39° auf die Basisfläche auftreffen, ergibt sich für die minimale Brechzahl des zu verwenden Glases des Prismas n = 1,589.

Um die Grenzfläche des Glas- /Luftübergangs an der Basisfläche vor Verschmutzung zu schützen, ist in einer weiteren Ausgestaltung der Erfindung vor der Basisfläche eine Planglasscheibe mit einem Luftabstand angeordnet. Durch die Gewährleistung dieser absolut sauberen Grenzfläche besteht die Möglichkeit, dass sich Randbereiche des eintretenden Strahlenbüschels mit Randbereichen des gespiegelten, totalreflektierten Strahlenbüschels auf der Basisfläche überlappen können, ohne dass störende optische Überlagerungseffekte entstehen.

In einer weiteren Ausführung der Erfindung ist als Abstandshalter zwischen der Planglasscheibe und der Basisfläche des Prismas eine rahmenförmige Klebefolie vorgesehen. Auf diese Weise lässt sich gleichzeitig das Planglas einfach am Prisma befestigen und der Zwischenraum luftdicht verschließen. Die Basisfläche des Prismas ist damit dauerhaft und sicher vor Verschmutzungen während des Gebrauchs geschützt. Eine Störung der Totalreflexion wird damit verhindert.

In vorteilhafter Weise ist bei einem erfindungsgemäßen Winkelvorsatz lichtaustrittsseitig eine Okularfassung am Gehäuse vorgesehen, die zum Gehäuseinneren mit einer Planglasscheibe abgeschlossen und einblickseitig mit einer Gummiarmierung versehen ist. Mit dieser Maßnahme wird ein Aufgreifen und damit Verschmutzen der Lichtaustrittsfläche des Umlenkprismas wirksam verhindert. Ein Anlegen des Auges an die Gummiarmierung ist bequem möglich.

Für Brillenträger besteht der Nachteil, dass sich ihr Auge durch die Brille bereits in einem erheblichen Abstand hinter dem Einblick befindet und der Sucherbereich nicht vollständig überblickt werden kann. In einer erfindungsgemäßen Fortbildung weist daher die Okularfassung des Winkelvorsatz einblickseitig ein Innengewinde zur Aufnahme einer Dioptrieausgleichslinse auf. Auf diese Weise ist es Brillenträgern möglich, ohne Brille ein scharfes und möglichst vollständiges Sucherbild zu erfassen.

In einer besonders vorteilhaften Ausgestaltung ist lichteintrittseitig eine im Gehäuse drehbar gelagerte Befestigungsschraube mit Außengewinde zum Einschrauben in den Einblicksucher der Kamera vorgesehen. Auf diese Weise ist das Gehäuse um die optische Achse des Einblicksuchers der Kamera fixierbar zu verdrehen und ermöglicht so verschiedene, quer zu dieser Achse liegende Einblickrichtungen, wobei die Bilddarstellung erhalten bleibt.

Besonders vorteilhaft ist eine Befestigungsschraube, die einen aus dem Gehäuse hervorstehenden Rändelring aufweist. Das Lösen der Verschraubung gestaltet sich besonders einfach und das Gehäuse lässt sich bequem in die vom Fotograf gewünschte Stellung drehen und anschließend wieder festschrauben.

In einer weiteren Ausgestaltung sind das Innengewinde an der Okularfassung und das Außengewinde zum Einschrauben in den Einblicksucher vom gleichen Typ, vorzugsweise M12 x 0,5 mm. Auf diese Weise ist ein hohes Maß an Kompatibilität mit anderen Ergänzungsteilen sichergestellt und Zubehörteile, die für den Einblicksucher der Kamera vorgesehen sind, lassen sich an dem neuen Gehäuse ebenfalls verwenden.

Ein Ausführungsbeispiel eines erfindungsgemäßen Winkelvorsatzes ist in der Zeichnung schematisch dargestellt und wird nachfolgend anhand der Figuren näher beschrieben.
Dabei zeigen:
- Fig. 1: eine Schnittdarstellung durch einen Winkelvorsatz,
- Fig. 2: die Anordnung des Winkelvorsatzes an einer Meßsucherkamera in senkrechter Darstellung und
- Fig.3: die gleiche Anordnung in einer waagerechten Ausrichtung des Winkelvorsatzes.

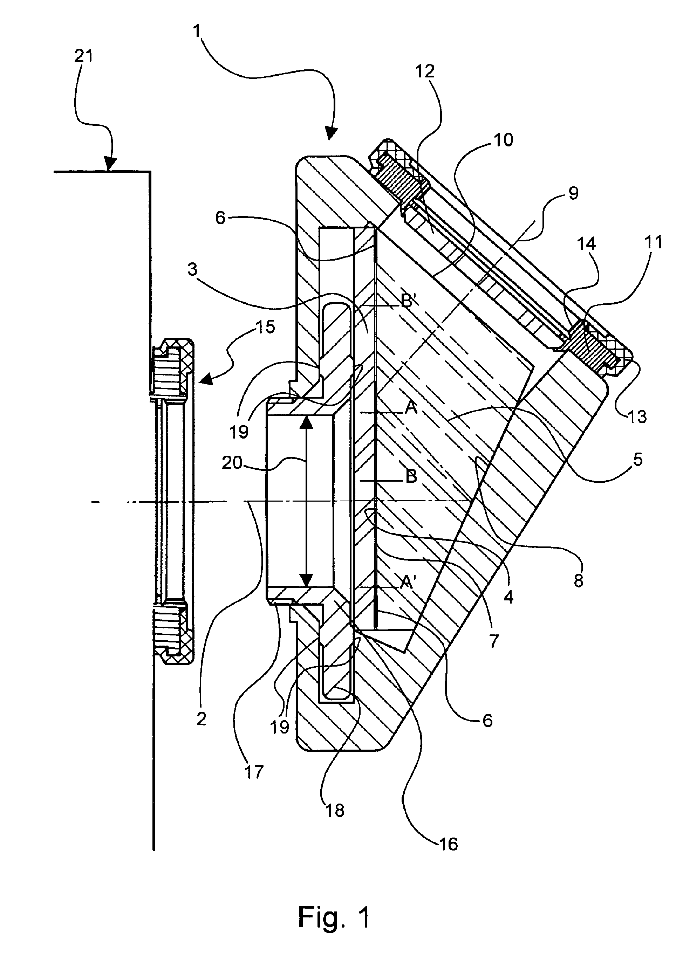

In Figur 1 ist eine längsgeschnittene Darstellung eines erfindungsgemäßen Winkelvorsatzes 1 mit seinen Einzelheiten gezeigt. Ein in das Gehäuse 1 eintretender Strahl 2 trifft senkrecht auf eine Planglasscheibe 3 auf und tritt nach deren Durchtritt wiederum senkrecht in einen ersten Bereich einer Basisfläche 4 eines Bauernfeindprismas 5 ein. Die Planglasscheibe 3 ist mit einer Klebefolie 6 am Bauernfeindprisma 5 befestigt und stellt auf diese Weise einen Luftabstand 7 her. Der in das Bauernfeindprisma 5 eingetretene Strahl 2 trifft auf eine Spiegelfläche 8, wird unter einem totalreflektierenden Winkel auf einen zweiten Bereich der Basisfläche 4 gespiegelt und tritt als total reflektierter Strahl 9 unter einem Winkel von 48° zum eintretenden Strahl 2 senkrecht aus der Lichtaustrittsfläche 10 aus.

Den lichtaustrittseitigen Abschluss des Gehäuses 1 bildet eine in einer Okularfassung 11 gelagerte Okularplanglasscheibe 12. Die Okularfassung 11 ist zur bequemen Augenanlage mit einer Gummiarmierung 13 versehen und weist ein Innengewinde 14 zur Aufnahme von nicht dargestellten Dioptrieausgleichslinsen auf.

Die Befestigung des Gehäuses 1 an einem Einblicksucher 15 einer Kamera erfolgt durch eine Befestigungsschraube 16 mit Außengewinde 17. Die Befestigungsschraube 16 lässt sich bequem über einen aus dem Gehäuse 1 vorstehenden Rändelring 18 drehen. Der Rändelring 18 weist auf seinen in radialer Richtung außen liegenden Flächen regelmäßig verteilte Gleitnoppen 19 auf, die die Lage der Befestigungsschraube 16 im Gehäuse 1 abstützen und eine geräuscharme Drehung ermöglichen. Zur Verbesserung der Gleitfähigkeit der Gleitnoppen 19 können am Gehäuse 1 und auf der Planglasscheibe 3 Teflonfolien aufgebracht sein.

Das dem eintretenden Strahl 2 entsprechende Sucher-Strahlenbündel ist nicht weiter dargestellt, jedoch geometrisch durch den Eingangsdurchmesser 20 der Befestigungsschraube 16 beeinflußt. Zur Verdeutlichung des im Zusammenhang mit dem eintretenden Strahl 2 genannten ersten Bereichs der Basisfläche 4 des Bauernfeindprismas 5 sind Bezugszeichen A,A' eingefügt, die den vom Sucherstrahlenbündel durchtretenen ersten Bereich abgrenzen sollen. Ebenso ist durch B,B' der zweite Bereich der Totalreflexion des Strahlenbündels angedeutet. Diese Darstellung zeigt schematisch die Überlappung A/B des ersten A,A' und des zweiten B,B' Bereichs auf der Basisfläche 4 des Bauernfeindprismas 5.

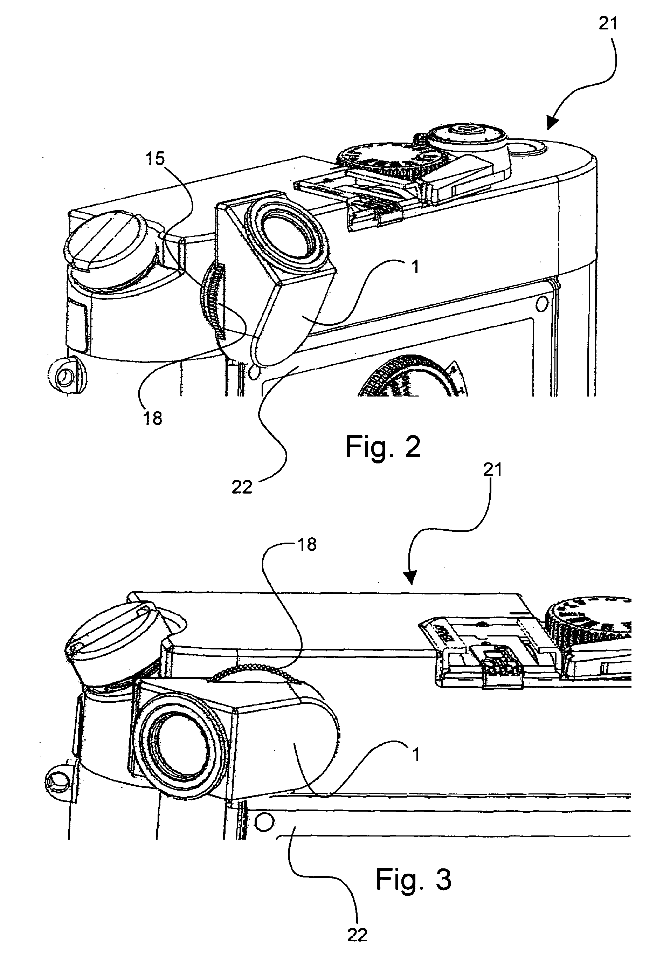

Figur 2 zeigt das am Einblicksucher 15 einer Meßsucherkamera 21 in einer senkrechten Stellung angeschraubte Gehäuse 1. Dabei ist der aus dem Gehäuse 1 seitlich herausragende Rändelring 18 deutlich zu sehen.

Figur 3 zeigt ebenfalls eine Darstellung des am Einblick einer Meßsucherkamera 21 angeschraubten Gehäuses 1, jedoch in einer waagerechten Stellung. Hier ist besonders deutlich die kompakte Bauform zu sehen, die ermöglicht, dass die rückwärtige Filmandruckplatte 22 zum Einlegen eines neuen Films trotz des angeschraubten Gehäuses 1 noch möglich ist.

### Bezugszeichenliste

- 1: Gehäuse des Winkelvorsatzes
- 2: eintretender Strahl
- 3: Planglasscheibe
- 4: Basisfläche
- 5: Bauernfeindprisma
- 6: Klebefolie
- 7: Luftabstand
- 8: Spiegelfläche
- 9: totalreflektierter Strahl
- 10: Lichtaustrittsfläche
- 11: Okularfassung
- 12: Okularplanglasscheibe
- 13: Gummiarmierung
- 14: Innengewinde
- 15: Einblicksucher
- 16: Befestigungsschraube
- 17: Außengewinde
- 18: Rändelring
- 19: Gleitnoppen
- 20: Eingangsdurchmesser
- 21: Kamera
- 22: Filmandruckplatte

## Patentansprüche

1. Winkelvorsatz mit einem Gehäuse (1) zur Befestigung am Einblick (15) einer Meßsucherkamera (21) mit seiten- und höhenrichtiger Darstellung des Sucherbildes unter verändertem Einblickwinkel, **dadurch gekennzeichnet, dass** als Bildumlenkelement ein Bauernfeindprisma (5) mit zweimaliger Reflexion in einer Ebene vorgesehen ist, wobei ein erster Bereich (A,A') der Basisfläche (4) des Bauernfeindprismas (5) dem Einblicksucher (15) nachgeschaltet ist, die diesem Bereich gegenüberliegende Fläche als Spiegelfläche (8) ausgebildet und zur Basisfläche (4) derart geneigt ist, dass ein senkrecht in den ersten Bereich eintretender Strahl (2) auf einen zweiten Bereich (B,B') der Basisfläche (4) unter einem totalreflektierenden Winkel gespiegelt wird und die Lichtaustrittsfläche (10) des Bauernfeindprismas (5) gegenüber der Basisfläche (4) derart geneigt ist, dass der totalreflektierte Strahl (9) senkrecht auf die Lichtaustrittsfläche (10) trifft.

2. Winkelvorsatz nach Patentanspruch 1, **dadurch gekennzeichnet, dass** die Spiegelfläche (8) einen Winkel von 24° und die Lichtaustrittsfläche (10) einen Winkel von 48° Grad mit der Basisfläche (4) einschließen.

3. Winkelvorsatz nach Patentanspruch 1, **dadurch gekennzeichnet, dass** vor der Basisfläche (4) mit einem Luftabstand (7) eine Planglasscheibe (3) angeordnet ist.

4. Winkelvorsatz nach Patentanspruch 3, **dadurch gekennzeichnet, dass** als Abstandshalter eine rahmenförmige Klebefolie (6) vorgesehen ist.

5. Winkelvorsatz nach einem der vorhergehenden Patentansprüche, **dadurch gekennzeichnet, dass** das Gehäuse (1) lichtaustrittsseitig eine Okularfassung (11) aufweist, die zum Gehäuseinneren mit einer Planglasscheibe (12) abgeschlossen ist und einblickseitig mit einer Gummiarmierung (13) versehen ist.

6. Winkelvorsatz nach Patentanspruch 5, **dadurch gekennzeichnet, dass** die Okularfassung (11) einblickseitig ein Innengewinde (14) zur Aufnahme einer Dioptrieausgleichslinse aufweist.

7. Winkelvorsatz nach einem der vorhergehenden Patentansprüche, **dadurch gekennzeichnet, dass** lichteintrittsseitig eine im Gehäuse (1) drehbar gelagerte (19) Befestigungsschraube (16) mit Außengewinde (17) zum Einschrauben in den Einblicksucher (15) der Kamera (21) vorgesehen ist.

8. Winkelvorsatz nach Patentanspruch 7, **dadurch gekennzeichnet, dass** die Befestigungsschraube (16) einen aus dem Gehäuse (1) vorstehenden Rändelring (18) aufweist.

9. Winkelvorsatz nach Patentanspruch 6 und 7, **dadurch gekennzeichnet, dass** das Innen- und Außengewinde (14, 17) vom Typ M12 x 0,5 sind.
